Europäisches Patentamt

European Patent Office

Office européen des brevets

(19)

(11) Veröffentlichungsnummer: **0 135 968**
**B1**

(12) **EUROPÄISCHE PATENTSCHRIFT**

(45) Veröffentlichungstag der Patentschrift:
.22.04.87

(51) Int. Cl.⁴: **H 02 M 5/293**

(21) Anmeldenummer: **84201314.6**

(22) Anmeldetag: **12.09.84**

(54) **Wechselspannungsumsetzer.**

(30) Priorität: **17.09.83 DE 3333656**

(43) Veröffentlichungstag der Anmeldung:
**03.04.85 Patentblatt 85/14**

(45) Bekanntmachung des Hinweises auf die Patenterteilung:
**22.04.87 Patentblatt 87/17**

(84) Benannte Vertragsstaaten:
**AT BE DE FR GB IT NL**

(56) Entgegenhaltungen:
**DE - A - 2 728 377**
**DE - A - 2 950 978**
**US - A - 1 973 055**

(73) Patentinhaber: **Philips Patentverwaltung GmbH,
Billstrasse 80, D-2000 Hamburg 28 (DE)**
(84) Benannte Vertragsstaaten: **DE**

(73) Patentinhaber: **N.V. Philips' Gloeilampenfabrieken,
Groenewoudseweg 1, NL-5621 BA Eindhoven (NL)**
(84) Benannte Vertragsstaaten: **BE FR GB IT NL AT**

(72) Erfinder: **Löhn, Klaus, Dr., Clara-Viebig-Strasse 13,
D-5107 Simmerath (DE)**

(74) Vertreter: **Auer, Horst, Dipl.-Ing. et al, Philips
Patentverwaltung GmbH
Billstrasse 80 Postfach 10 51 49,
D-2000 Hamburg 28 (DE)**

ACTORUM AG

## Beschreibung

Die Erfindung bezieht sich auf einen Wechselspannungsumsetzer mit je einem Sperrwandler zum Umformen der positiven und negativen Halbwellen einer Eingangswechselspannung in Halbwellen einer Ausgangswechselspannung gleicher Frequenz unter Zwischenumformung in hochfrequente Spannungen, wobei jeder Sperrwandler einen hochfrequent gesteuerten Schalttransistor aufweist, über den eine Drosselspule von der betreffenden Eingangswechselspannungs-Halbwelle im Impulsbetrieb gespeist ist, und wobei die Ausgangsspannung jedes Sperrwandlers über ein Freilaufventil von der Drosselspule abgegriffen und auf einen Ausgangskondensator übertragen wird. Gegenüber den sonst üblichen Netztransformatoren ergeben sich bei solchen Wechselspannungsumsetzern Material- und Gewichtseinsparungen und Möglichkeiten der Spannungs- und Leistungsregelung.

Ein aus der US-PS-1973055 bekannter Wechselspannungsumsetzer ist mit Gegentakt-Leistungsverstärkern ausgerüstet und besitzt zwei voneinander getrennte Schaltkreise für die jeweils positiven und negtiven Halbwellen der Eingangswechselspannung. Unabhängig davon, dass der bekannte Wechselspannungsumsetzer noch mit Elektronenröhren bestückt ist, ist er allein schon infolge seines grundsätzlichen Aufbaues platzaufwendig und teuer. Wenn man einen solchen Wechselspannungsumsetzer zum Betrieb von Kleinmotoren oder Gasentladungslampen verwenden will, ist man heutzutage bestrebt, ihn so klein zu halten, dass er praktisch in die Motoren oder Lampen eingebaut werden kann.

Aus der DE-OS-2728377 ist ein Wechselspannungsumsetzer eingangs erwähnter Art bekannt, bei dem die Drosselspule als Transformator mit vier Wicklungen ausgebildet ist, an deren Primärwicklungen die mit einer gemeinsamen Eingangsklemme verbundenen Schalttransistoren und anderen Sekundärwicklungen die mit einer gemeinsamen Ausgangsklemme verbundenen Freilaufventile in Form von Leistungsschaltern angeschlossen sind. Die Mittelanzapfungen des Transformators sind mit den anderen Eingangs- bzw. Ausgangsklemmen verbunden. Die als Freilaufventile arbeitenden Leistungsschalter müssen im hochfrequenten Takt der Schalttransistoren geschaltet werden, was besonderer Hochfrequenzbauelemente bedarf. Ausserdem ist der für diesen Umsetzer benötigte Transformator wiederum gross und aufwendig.

Der Erfindung liegt daher die Aufgabe zugrunde, einen Wechselspannungsumsetzer zu schaffen mit einem minimalen Aufwand an passiven Einzelbauelementen, wie Spulen, Kondensatoren usw. Diese passiven Bauelemente benötigen auch noch heutzutage relativ viel Platz, während die aktiven Bauelemente, wie Transistoren, Dioden usw., als integrierte Schaltungen zusammengefasst werden können. Zum Schalten sollen allerdings möglichst wenig hochfrequent betriebene Transistoren verwendet werden.

Diese Aufgabe wird bei einem Wechselspannungsumsetzer eingangs erwähnter Art gemäss der Erfindung dadurch gelöst, dass der Schalttransistor einschliesslich einer parallelgeschalteten Rückwärtsdiode und das als Freilaufdiode ausgebildete Freilaufventil jedes Sperrwandlers in Reihe geschaltet sind und die beiden Reihenschaltungen der einen bzw. der anderen Klemme der Eingangswechselspannung zugeordnet sind, dass eine beiden Sperrwandlern gemeinsame Drosselspule zwischen den Verbindungspunkten von Schalttransistor und Freilaufdiode der Sperrwandler vorgesehen ist, und dass jedem Sperrwandler ein im Takt der Eingangsfrequenz schaltender Zusatztransistor zugeordnet ist, der den Schalttransistor und die Freilaufdiode des jeweils in inaktivem Zustand befindlichen Sperrwandlers überbrückt.

Unter dem inaktiven Zustand eines Sperrwandlers ist der Zustand zu verstehen, bei dem der Sperrwandler nicht mit der von ihm umzuformenden Halbwelle der Eingangswechselspannung beaufschlagt wird.

Durch die Verwendung von Sperrwandlern lässt sich die Eingangswechselspannung sowohl herauf- als auch herabtransformieren, d.h., es lassen sich Ausgangsspannungen über und unter der Eingangsspannung erzeugen. Auf diese Weise erhält man ohne zusätzliche Hilfsmittel z.B. Zünd- und Wiederzündspannungen für Entladungslampen. Jeder der beiden Sperrwandler arbeitet jeweils in einer Halbwelle der Eingangswechselspannung, wobei die beiden niederfrequent arbeitenden Zusatztransistoren die Umschaltung der Sperrwandler von einer Halbwelle zur anderen bewirken. Die passiven Einzelbauelemente der beiden Sperrwandler sind jeweils zu gemeinsamen Bauelementen zusammengefasst, wodurch der Schaltungsaufwand niedrig gehalten wird.

Vorzugsweise ist den beiden Sperrwandlern ein gemeinsamer Eingangskondensator zur Speisung vorgeschaltet.

Gemäss einer bevorzugten Weiterbildung des Wechselspannungsumsetzers nach der Erfindung sind die Zusatztransistoren mit ihrer Basis jeweils an eine, insbesondere impulsförmige Wechselspannungsquelle mit einer der Eingangswechselspannung entsprechenden Freqenz und mit ihrem Emitter an den mit einer Klemme der Eingangswechselspannung in Verbindung stehenden Emitter des jeweiligen Sperrwandler-Schalttransistor angeschlossen. Dies hat den Vorteil, dass die Emitter der Zusatztransistoren an der Eingangswechselspannung liegen, also nicht mit Hochfrequenz beaufschlagt werden, wodurch sich ihre Steuerung vereinfacht.

Eine weitere Verbesserung und Vereinfachung eines derartigen Wechselspannungsumsetzers lässt sich gemäss der Erfindung erreichen, wenn die Zusatztransistoren mit ihrer Basis jeweils an eine Klemme der Eingangswechselspannung angeschlossen sind, während die Emitter-Basis-Strecke jedes Zusatztransistors durch eine gegenüber der Basisdiode des betreffenden Zusatztransistors entgegengesetzt gepolte Zusatzdiode überbrückt ist. Damit erübrigt sich eine zusätzliche Steuerungsquelle für die Zusatztransistoren.

Für die Schalttransistoren werden Hochvolt-Feldeffekttransistoren bevorzugt, da bei diesen die den Schalttransistoren parallel geschaltete Rückwärtsdiode bereits enthalten ist.

Die Zusatztransistoren sind vorzugsweise Hochvolt-Bipolartransistoren.

Ausführungsbeispiele von Wechselspannungsumsetzern nach der Erfindung werden nunmehr anhand der Zeichnung näher erläutert. Es zeigen:

Fig. 1 die Prinzipschaltung eines Sperrwandlers;

Fig. 2 die Prinzipschaltung eines Wechselspannungsumsetzers mit zwei zusammengeschalteten Sperrwandlern;

Fig. 3 die Schaltungsanordnung eines Wechselspannungsumsetzers und

Fig. 4 die Schaltungsanordnung eines weiteren Wechselspannungsumsetzers.

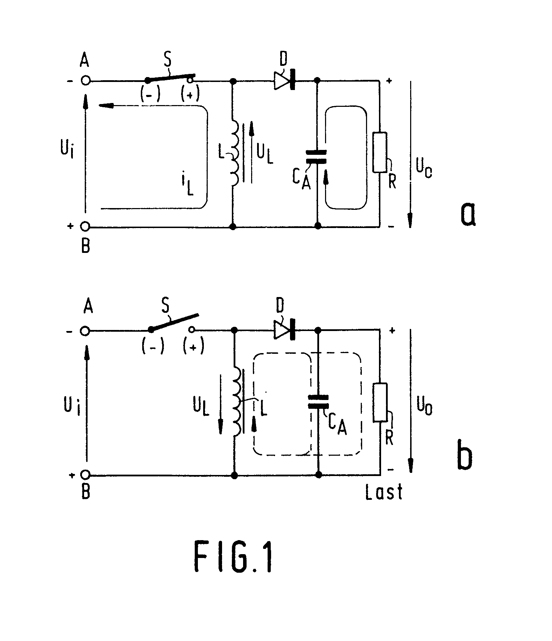

Bei dem Spannungswandler nach Fig. 1 ist über einen Schalter S eine Drosselspule L an die Klemme A und B einer Gleichspannungsquelle angeschlossen. Parallel zur Drosselspule L liegt ein als Speicherkondensator dienender Ausgangskondensator $C_A$, der mit der Drosselspule L über eine Freilaufdiode D verbunden ist. An den Ausgangskondensator $C_A$ schliesst sich eine Last R an. Fig. 1a zeigt den Sperrwandler in der Leitphase und Fig. 1b in der Sperrphase.

Dieses Prinzip eines Sperrwandlers entspricht der Darstellung im Buch von Wüstehube, «Schaltnetzteile», Expert-Verlag 1979, aber zum besseren Verständnis des Folgenden modifiziert für negative Eingangsspannung. Der Schalter S wird mit hoher Frequenz f = 1/T (üblicherweise 20 bis 200 kHz) ein- und ausgeschaltet, wobei das Verhältnis von Einschaltzeit zur Periode T das Tastverhältnis $V_T$ genannt wird. Während der Einschaltzeit $V_T.T$ liegt an der Drosselspule L die konstante Gleichspannung $U_i$ und der Spulenstrom $i_L$ steigt linear mit der Zeit, wobei die Drosselspule L magnetische Energie aufnimmt (Leitphase, Fig. 1a). Die Diode D ist in dieser Phase gesperrt.

In der darauffolgenden Ausschaltzeit (Sperrphase, Fig. 1b) öffnet S und die Spule gibt ihre aufgenommene Energie über die Diode D an den Speicherkondensator $C_A$ und die Last R ab. Während der Leitphase wird die Last R, wie in Fig. 1a angegeben, aus dem Speicherkondensator $C_A$ gespeist.

Entsprechend der Funktion der Schaltung entsteht am Speicherkondensator $C_A$ aus der negativen Eingangsspannung eine positive Ausgangsspannung.

Nach der Theorie der Schaltnetzteile bestehen zwei grundsätzlich verschiedene Betriebszustände. Im ersten Fall ist im eingeschwungenen Zustand der mittlere Spulenstrom so gross, dass am Anfang der Leitphase und am Ende der Sperrphase ein von Null verschiedener Grundstrom verbleibt, die Drosselspule L sich also nie vollständig entleert (Wüstehube, S. 91, Bild 3.3). Dieser kontinuierliche oder Trapezbetrieb erzeugt ein festes Verhältnis von Ausgangs- zu Eingangsspannung, regelbar durch das Tastverhältnis $V_T$:

$$U_o = \frac{V_T}{1-V_T} U_i,$$

so dass man von einem Gleichspannungstransformator sprechen könnte, dessen Übersetzungsverhältnis durch $V_T$ eingestellt werden kann.

Die zweite Betriebsart ist der diskontinuierliche oder Dreiecksbetrieb. Hier entlädt sich die Drosselspule L in jeder Periode der Schaltfrequenz vollständig; der Stromanstieg erfolgt vom Strom Null aus (Wüstehube, S. 90, Bild 3.2b). In dieser Betriebsart wird kein festes Spannungsverhältnis eingestellt, sondern die Schaltung nimmt bei fester Betriebsfrequenz und festem Tastverhältnis einen zur Eingangsspannung proportionalen festen Strom auf und gibt damit eine feste aufgenommene Leistung P an die Last R weiter. Spannung und Strom an der Last R richten sich dann nach deren Impedanz nach den bekannten Beziehungen

$$U_o^2 = P.R \text{ und } I_o^2 = P/R.$$

Die Spannungen $U_i$ und $U_o$ müssen nicht notwendig (konstante) Gleichspannungen sein. Die bisher beschriebenen Vorgänge und Relationen bleiben für jeden Zeitpunkt erhalten, wenn sich $U_i$ nur langsam im Vergleich zu den Schaltzeiten T ändert, so dass über die Dauer einer Schaltphase (5 bis 50 μm) $U_i$ als konstant angesehen werden kann. Dies ist bei Änderungen von $U_i$ mit der üblichen Netzfrequenz (50/60 Hz) gut erfüllt; bei Anlegen von (negativen) sinusförmigen Halbwellen von Netzfrequenz ergeben sich auch am Ausgang (positive) sinusförmige Halbwellen der gleichen Frequenz. Um diesen Betrieb zu gewährleisten, darf die Zeitkonstante R.C nicht zu gross sein. Diese Ausgangskombination soll einerseits so träge sein, dass für die Schaltperiode T mit konstanter Ausgangsspannung $U_o$ gerechnet werden kann, aber doch so wenig träge, dass die Ausgangsspannung dem Nnetzsinus folgen kann. Beides wird in der Praxis nur mit einem gewissen Fehler erfüllt werden können, der klein gehalten werden kann, wenn Netzfrequenz und Schaltfrequenz genügend weit auseinanderliegen.

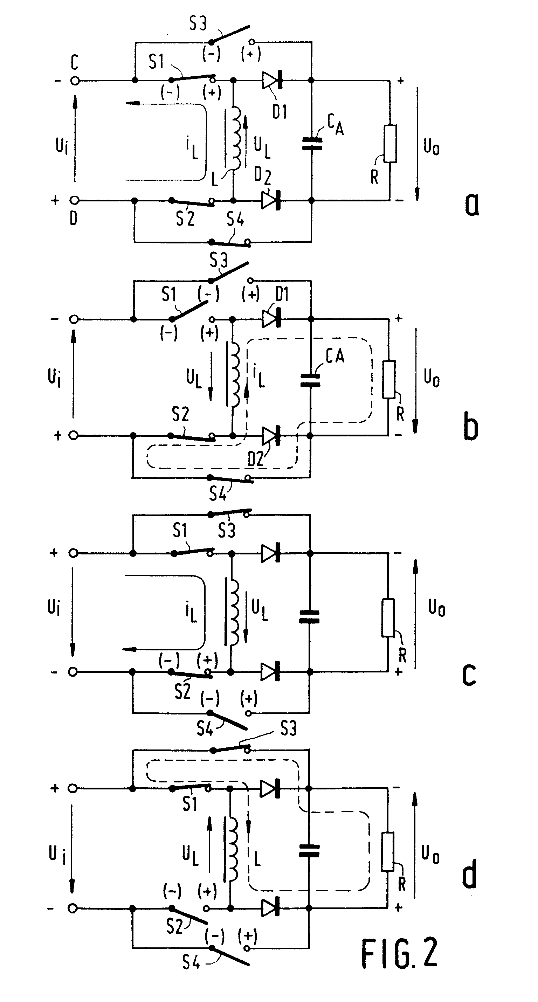

Um zu einem echten Wechselstrombetrieb anstatt nur zu einseitig gerichteten Halbwellen zu kommen, müsste in Fig. 1 die Diode D umgepolt werden und, wenn der Schalter S wie allgemein üblich als (unipolarer) Halbleiterschalter ausgeführt ist, wie in Fig. 1 durch (+) und (−) angedeutet, wären auch die Pole des Schalters zu vertauschen. Nach dem heutigen Stand der Technik kommen für kostengünstige Lösungen nur npn-Transistoren, n-Kanal-FETs oder andere Bauelemente für positive Betriebsspannung in Frage. Dann würde aber deren negativer Pol (Emitter, Source) mit der Drosselspule verbunden sein und die starken Spannungsschwankungen von $U_i$ und $U_o$ dieses Spulenendes mitmachen, was die Ansteuerung des Schalters erschweren würde. Eine andere Möglichkeit, zum Betrieb mit umgekehrter Polung zu kommen, besteht erfindungsgemäss darin, einen gleichsinnigen Schalter und eine gleichsinnige Diode in die gegenüberliegende Leitung einzufügen. Fig. 2 zeigt eine derartige Anordnung.

Der Wechselspannungsumsetzer nach Fig. 2 besitzt eine Drosselspule L, die über zwei Schalter S1 und S2 mit den Klemmen C und D einer Eingangswechselspannungsquelle verbunden ist. Parallel zur Drosselspule L liegt der Ausgangskondensator $C_A$, der mit der Drosselspule L über zwei Freilaufdioden D1 und D2 verbunden ist. An den Kondensator $C_A$ schliesst sich die Last R an. Der Schalter S1 und die mit ihm in Reihe liegende Freilaufdiode D1 sind von einem Schalter S3 überbrückt, während der Schalter S2 und die mit ihm in Reihe liegende Freilaufdiode D2 von einem Schalter S4 überbrückt sind. Der Schalter S1, die Freilaufdiode D1, die Drosselspule L und der Ausgangskondensator $C_A$ einerseits und der Schalter S2, die Freilaufdiode D2, die Drosselspule L und der Ausgangskondensator $C_A$ andererseits bilden jeweils einen Sperrwandler mit gemeinsamer Drosselspule L und gemeinsamem Ausgangskondensator $C_A$.

Die Schaltungen nach Fig. 2a und 2b zeigen den Wechselspannungsumsetzer in der negativen Halbwelle der Eingangsswechselspannung, wobei der Schalter S3 offen ist und die Schalter $S_2$ und $S_4$ geschlossen sind. Fig. 2a stellt hierbei die Leitphase dar mit geschlossenem Schalter S1, während in Fig. 1b die Sperrphase gezeigt ist mit geöffnetem Schalter S1.

Die Schaltungen nach Fig. 2c und 2d zeigen den Wechselspannungsumsetzer in der positiven Halbwelle der Eingangswechselspannung, wobei der Schalter S4 offen ist und die Schalter S1 und S3 geschlossen sind. Fig. 2c stellt hierbei die Leitphase dar mit geschlossenem Schalter S2, während in Fig. 2d die Sperrphase gezeigt ist mit geöffnetem Schalter S2.

S2 und D2 sind die spiegelbildlich eingefügten Bauelemente für die umgekehrte Polung. In der negativen Halbwelle, wie sie bisher betrachtet wurde, werden S2 und D2 durch einen Zusatzschalter S4 überbrückt, während in der positiven Halbwelle ein weiterer Zusatzschalter S3 die ursprüngliche Schalter/Dioden-Kombination (S1/D1) kurzschliesst. Die beiden Zusatzschalter S3, S4 müssen die gleichen Spannungsanforderungen wie die Hauptschalter S1, S2 erfüllen, können aber wesentlich langsamer schalten, da sie nur im Takt der Netzfrequenz umgeschaltet werden. Wie bei dem Sperrwandler nach Fig. 1 kann die den beiden Sperrwandlern gemeinsame Drosselspule L so dimensioniert werden, dass sich ein kontinuierlicher Betrieb einstellt. Man erhält dann eine von $V_T$ abhängige feste Wechselspannungstransformation, oder, wenn die Schaltung diskontinuierlich betrieben wird, wird eine feste Wechselleistung übertragen.

Den gesamten Verlauf der Schaltzustände der vier Schalter zeigen Fig. 2a bis 2d. Während der negativen Halbwelle (Fig. 2a, b) ist S3 offen und S2 und S4 sind geschlossen, während S1 als Schalter S im Sinne von Fig. 1 arbeitet und die Energieübertragung bewirkt. Während der positiven Halbwelle (Fig. 2c, d) werden S4 geöffnet und S1 und S2 geschlossen, und S2 überträgt die Energie analog zum Prinzipschaltbild der Fig. 1. Diese Schaltung ist also bei geeigneter Ansteuerung der Schalter in der Lage, sowohl positiv als auch negativ gepolte Spannungen und, nach dem vorher über Halbwellen Gesagten, damit auch sinusförmigen Wechselstrom von Netzfrequenz zu übertragen.

Wie man aus Fig. 2 sieht, müssen die Schalter S3, S4 nicht unbedingt die zugehörige Schalter/Dioden-Kombinationen überbrücken. Es würde genügen, wenn S3 die Diode D1 und S4 die Diode D2 überbrückt, denn mit S4 ist auch immer S2 geschlossen und mit S3 auch immer S1. Aber die Polung von S3 und S4 [(–), (+)] zeigt, dass dann für Transistoren das oben beschriebene Problem auftreten würde, dass der negative Pol mit der Drosselspule verbunden ist. Dies ergibt wieder Probleme mit der Ansteuerung, wenn Halbleiter für positive Betriebsspannungen (npn-Transistoren, n-Kanal-FETs usw.) verwendet werden. Daher ist die in Fig. 2 gezeigte Anordnung vorzuziehen.

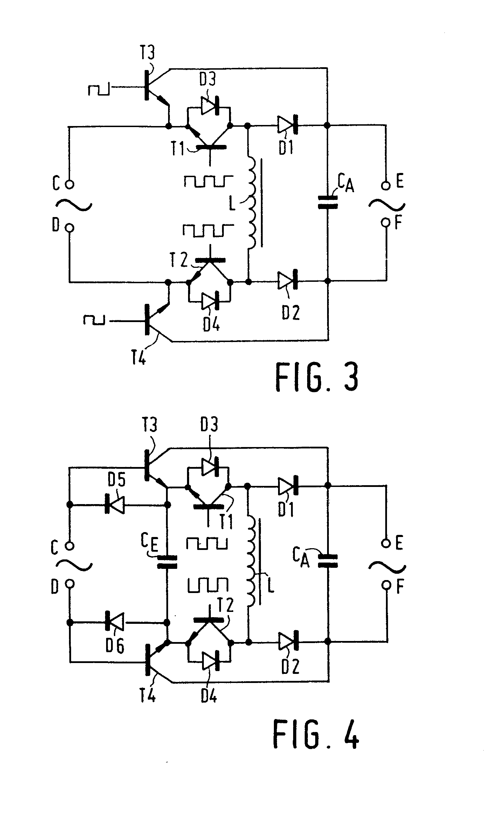

Fig. 3 zeigt ein Ausführungsbeispiel eines Wechselspannungsumsetzers nach Fig. 2 mit Bipolartransistoren T1, T2 als Schalter S1 bzw. S2. In der Halbwelle, in der die Kollektorspannung einer der Schalttransistoren T1 oder T2 negativ gegenüber seinem Emitter wird (inaktiver Zustand des mit T1 bzw. T2 gebildeten Sperrwandlers), übernimmt eine zur Kollektor-Emitterstrecke parallel geschaltete Rückwärtsdiode D3 bzw. D4 die Schaltfunktion von S1 bzw. S2. So erfordert die Umschaltung zwischen der positiven und negativen Halbwelle keine gesonderte Ansteuerung der Schalttransistoren, und diese sind durch die Rückwärtsdioden vor falscher Polung und Inversbetrieb geschützt. Falls die Schalttransistoren T1 und T2 als Hochvolt-Feldeffekttransistoren ausgeführt werden, sind die Dioden D3 und D4 als Rückwärtsdioden in diesen Bauelementen von der Technologie her schon enthalten.

Die Schalter S3 und S4 nach Fig. 2 sind bei dem Wechselspannungsumsetzer nach Fig. 3 Zusatztransistoren T3 und T4, die vorzugsweise als Hochvolt-Bipolartransistoren ausgebildet sind. Diese Zusatztransistoren T3 und T4 sind mit ihrer Basis an eine, insbesondere impulsförmige Wechselspannungsquelle mit einer der Eingangswechselspannung entsprechenden Frequenz und mit ihrem Emitter an den mit einer Klemme C bzw. D der Eingangswechselspannung in Verbindung stehenden Emitter des jeweiligen Schalttransistors T1 bzw. T2 angeschlossen.

In der negativen Halbwelle der Eingangswechselspannung bilden der Schalttransistor T1, die Drosselspule L und die Freilaufdiode D1 den Sperrwandler. Der Zusatztransistor T4 ist eingeschaltet und überbrückt den Schalttransistor T2 und die Freilaufdiode D2, während die Rückwärtsdiode D4 den Schalttransistor T2 kurzschliesst. Der Zusatztransistor T3 und die Rückwärtsdiode D3 sperren. Während der positiven Halbwelle der Eingangswechselspannung bilden der Schalttransistor T2, die Drosselspule L und die Freilaufdiode D2 den Sperrwandler. Der Zusatztransistor T3 und die Rückwärtsdiode D3 sind leitend, während der Schalttransistor T4 und die Rückwärtsdiode D4 sperren. Jede der beiden so gebildeten Sperrwandler arbeitet während seiner Halbwelle als normaler Gleichspannungswandler.

Die Zusatztransistoren T3 und T4 werden gemäss ihrer Funktion als Schalter S3 und S4 in Fig. 2 im Takt der Netzfrequenz ein- und ausgeschaltet, wobei es im Prinzip belanglos ist, ob die Ansteuerung durch Rechtecksignale, wie in Fig. 3 gezeigt, erfolgt oder durch sonstige Strom- oder Spannungsformen, wenn sie nur das Durch- und Abschalten der Zusatztransistoren bewirken.

Eine besonders einfache Ansteuerung dieser Zusatztransistoren zeigt Fig. 4. Bei diesem Wechselspannungsumsetzer sind die Zusatztransistoren T3 und T4 mit ihrer Basis jeweils an einer Klemme C bzw. D der Eingangswechselspannung angeschlossen. Die Emitter-Basis-Strecke jedes Zusatztransistors T3 und T4 ist durch eine gegenüber der Basisdiode des betreffenden Zusatztransistors T3 bzw. T4 entgegengesetzt gepolte Zusatzdiode D5 bzw. D6 überbrückt. Hierbei wird die Umschaltung der Zusatztransistoren also durch den Eingangswechselstrom bewirkt, der über die Basis-Emitter-Diode der Zusatztransistoren geführt wird, wobei jeweils eine der Zusatzdioden D5, D6 den Strompfad für die Sperrichtung des jeweiligen Zusatztransistors T3 oder T4 schliesst.

Der in diesem Wechselspannungsumsetzer hinzugekommene Eingangskondensator $C_E$ erleichtert das Umschalten der Zusatztransistoren im Netznulldurchgang. Ein solcher Eingangskondensator $C_E$ ist in der Praxis ohnehin erforderlich, um die durch den Schaltbetrieb auftretenden Hochfrequenzströme vom Netz fernzuhalten (Entstörung). Die Kondensatoren $C_E$ und $C_A$ sollen einen niedrigen Widerstand für die Schaltfrequenz (25 bis 500 kHz) der Schalttransistoren T1 und T2 und einen hohen Widerstand für die Ausgangsfrequenz haben.

Am Ausgang E, F der Wechselspannungsumsetzer nach den Fig. 3 und 4 entsteht eine Wechselspannung mit einer der Eingangswechselspannung entsprechenden Frequenz, welche z.B. zum Betrieb einer Gasentladungslampe oder eines Kleinmotors geeignet ist. Bei einem Ausführungsbeispiel nach Fig. 4 mit einer an die Ausgangsklemme E–F angeschlossenen Niederdruck-Quecksilberdampfentladungslampe von 15 W bis 20 W betrug die Schaltfrequenz 100 kHz, die Induktivität der Drosselspule 500 μH und die Kapazität der Eingangs- und Ausgangskondensatoren 0,1 μF.

**Patentansprüche**

1. Wechselspannungsumsetzer mit je einem Sperrwandler zum Umformen der positiven und negativen Halbwellen einer Eingangswechselspannung in Halbwellen einer Ausgangswechselspannung gleicher Frequenz unter Zwischenumformung in hochfrequente Spannungen, wobei jeder Sperrwandler einen hochfrequent gesteuerten Schalttransistor (T1; T2) aufweist, über den eine Drosselspule (L) von der betreffenden Eingangswechselspannungs-Halbwelle im Impulsbetrieb gespeist ist, und wobei die Ausgangsspannung jedes Sperrwandlers über ein Freilaufventil (D1; D2) von der Drosselspule abgegriffen und auf einen Ausgangskondensator ($C_A$) übertragen wird, dadurch gekennzeichnet, dass der Schalttransistor einschliesslich einer parallelgeschalteten Rückwärtsdiode (D3; D4) und das als Freilaufdiode ausgebildete Freilaufventil jedes Sperrwandlers in Reihe geschaltet sind und die beiden Reihenschaltungen der einen bzw. der anderen Klemme (C; D) der Eingangswechselspannung zugeordnet sind, dass eine beiden Sperrwandlern gemeinsame Drosselspule (L) zwischen den Verbindungspunkten von Schalttransistor und Freilaufdiode der Sperrwandler vorgesehen ist, und dass jedem Sperrwandler ein im Takt der Eingangsfrequenz schaltender Zusatztransistor (T3; T4) zugeordnet ist, der den Schalttransistor und die Freilaufdiode des jeweils in inaktivem Zustand befindlichen Sperrwandlers überbrückt.

2. Wechselspannungsumsetzer nach Anspruch 1, dadurch gekennzeichnet, dass den beiden Sperrwandlern ein gemeinsamer Eingangskondensator ($C_E$) zur Speisung vorgeschaltet ist.

3. Wechselspannungsumsetzer nach Anspruch 1 oder 2, dadurch gekennzeichnet, dass die Zusatztransistoren (T3, T4) mit ihrer Basis an eine insbesondere impulsförmige Wechselspannungsquelle mit einer der Eingangswechselspannung entsprechenden Frequenz und mit ihrem Emitter an den mit einer Klemme (C, D) der Eingangswechselspannung in Verbindung stehenden Emitter des jeweiligen Sperrwandler-Schalttransistors (T1, T2) angeschlossen sind.

4. Wechselspannungsumsetzer nach Anspruch 3, dadurch gekennzeichnet, dass die Zusatztransistoren (T3, T4) mit ihrer Basis jeweils an eine Klemme (C, D) der Eingangswechselspannung angeschlossen sind und dass die Emitter-Basis-Strecke jedes Zusatztransistors durch eine gegenüber der Basisdiode des betreffenden Zusatztransistors entgegengesetzt gepolte Zusatzdiode (D5, D6) überbrückt ist.

5. Wechselspannungsumsetzer nach einem der Ansprüche 1 bis 4, dadurch gekennzeichnet, dass die Schalttransistoren (T1, T2) Hochvolt-Feldeffekttransistoren sind.

6. Wechselspannungsumsetzer nach einem der Ansprüche 1 bis 5, dadurch gekennzeichnet, dass die Zusatztransistoren (T3, T4) Hochvolt-Bipolartransistoren sind.

**Claims**

1. An AC-voltage converter comprising a boost converter for converting the positive and negative half waves of an input alternating voltage into half waves of an output alternating voltage of the same frequency with intermediate conversion into high-frequency voltages, each boost converter having a switching transistor (T1; T2) controlled by high frequency, through which a choke coil (L) is fed by the relevant input alternating voltage half wave in the pulsatory mode, the output voltage of each boost converter being derived through a freewheeling valve (D1; D2) from the chocke coil and being transmitted to an output capacitor ($C_A$), characterized in that the switching transistor inclusive of a parallel connected backward diode (D3; D4) and the freewheeling valve in the form of a freewheeling diode of each boost converter are connected in series and the two series arrangements are assigned to one or the other terminal (C; D) of the input alternating voltage, in that a choke coil (L) common to the two boost converters is arranged between the junctions of the switching transistor and the freewheeling diode of the boost converters, and in that an auxiliary transistor (T3; T4) switching in the boost of the input frequency is assigned to each boost converter, which auxiliary transistor shunts the switching transistor and the freewheeling diode of the boost converter each time being in the inactive state.

2. An AC-voltage converter as claimed in claim 1, characterized in that a common input capacitor ($C_E$) for feeding purposes precedes the two boost converters.

3. An AC-voltage converter as claimed in claim 1 or 2, characterized in that the auxiliary transistors (T3, T4) are connected by their bases to a more particularly pulsatory alternating voltage source having a frequency corresponding to the input alternating voltage and by their emitters to the emitter of the respective boost converter transistor (T1, T2) coupled to a terminal (C, D) of the input alternating voltage.

4. AC-voltage converter as claimed in claim 3, characterized in that the auxiliary transistors (T3, T4) are each time connected by their bases to a terminal (C, D) of the input alternating voltage and in that the emitter-base path of each auxiliary transistor is shunted by an auxiliary diode (D5, D6) polarized in the opposite sense with respect to the base diode of the relevant auxiliary transistor.

5. AC-voltage converter as claimed in any one of claims 1 to 4, characterized in that the switching transistors (T1, T2) are highvoltage field effect transistors.

6. AC-voltage converter as claimed in any one of claims 1 to 4, characterized in that the auxiliary transistors (T3, T4) are highvoltage bipolar transistors.

**Revendications**

1. Convertisseur de tension alternative comportant chaque fois un transformateur d'isolement pour convertir les alternances positives et négatives d'une tension alternative d'entrée en des alternances d'une tension alternative de sortie de même fréquence, avec conversion intermédiaire en des tensions à haute fréquence, dans lequel chaque transformateur d'isolement comprend un transistor de commutation commandé à haute fréquence (T1; T2), par l'intermédiaire duquel une bobine de réactance (L) est alimentée en mode impulsionnel par l'alternance de tension alternative d'entrée correspondante, et dans lequel la tension de sortie de chaque transformateur d'isolement est prise sur la bobine de réactance par l'intermédiaire d'une soupape de roue libre (D1; D2) et est transmise à un condensateur de sortie ($C_A$), caractérisé en ce que le transistor de commutation, y compris une diode inverse (D3; D4) connectée en parallèle, et la soupape à effet de volant ayant la forme d'une diode à effet de volant de chaque transformateur d'isolement sont connectés en séries et les deux montages en série sont associés respectivement à l'une et à l'autre borne (C; D) de la tension alternative d'entrée, qu'une bobine de réactance (L) commune aux deux transformateurs d'isolement est prévue entre les points de connexion des transistors de commutation et des diodes à effet de volant des transformateurs d'isolement, et qu'à chaque transformateur d'isolement est associé un transistor supplémentaire (T3; T4) commutant à la cadence de la fréquence d'entrée, qui ponte chaque fois le transistor de commutation et la diode à effet de volant du transformateur d'isolement se trouvant dans l'état inactif.

2. Convertisseur de tension alternative suivant la revendication 1, caractérisé en ce qu'un condensateur d'entrée commun ($C_E$) précède les deux transformateurs d'isolement pour l'alimentation.

3. Convertisseur de tension, alternative suivant la revendication 1 ou 2, caractérisé en ce que les transistors supplémentaires (T3, T4) sont connectés, par leur base, chaque fois à une source de tension alternative, en particulier impulsionnelle, présentant une fréquence correspondant à la tension alternative d'entrée et, par leur émetteur, à l'émetteur de transistor de commutation (T1, T2) de transformateur d'isolement respectif connecté à une borne (C, D) de la tension alternative d'entrée.

4. Convertisseur de tension alternative suivant la revendication 3, caractérisé en ce que les transistors supplémentaires (T3, T4) sont connectés, par leur base, chaque fois à une borne (C, D) de la tension alternative d'entrée et que le trajet émetteur-base de chaque transistor supplémentaire est ponté par une diode supplémentaire (D5, D6) d'une polarité opposée à celle de la diode de base du transistor supplémentaire en question.

5. Convertisseur de tension alternative suivant l'une quelconque des revendications 1 à 4, caractérisé en ce que les transistors de commutation (T1, T2) sont des transistors à effet de champ pour haute tension.

6. Convertisseur de tension alternative suivant l'une quelconque des revendications 1 à 5, caractérisé en ce que les transistors supplémentaires (T3, T4) sont des transistors bipolaires pour haute tension.

FIG.1

0135968

FIG. 2

9

FIG. 3

FIG. 4